Europäisches Patentamt

European Patent Office

Office européen des brevets

(11) Veröffentlichungsnummer: **0 396 013**
**A2**

(12) **EUROPÄISCHE PATENTANMELDUNG**

(21) Anmeldenummer: **90107908.7**

(22) Anmeldetag: **26.04.90**

(51) Int. Cl.⁵: **B01J 19/00**

(30) Priorität: **05.05.89 DE 3914783**

(43) Veröffentlichungstag der Anmeldung:
**07.11.90 Patentblatt 90/45**

(84) Benannte Vertragsstaaten:
**AT BE CH DE ES FR GB IT LI NL**

(71) Anmelder: **MESSER GRIESHEIM GMBH**
**Hanauer Landstrasse 330**
**D-6000 Frankfurt/Main(DE)**

(72) Erfinder: **Löcken, Klaus Dr.**
**Itensbeckhof 2a**
**D-4300 Essen 11(DE)**
Erfinder: **Volker, Wolfgang**
**Pastorsbusch 35**
**D-4154 Tönisvorst 1(DE)**

(54) **Vorrichtung zum Verhindern des Eindringens von Fremdgasen durch die Beschickungsöffnung eines inertisierten Reaktionsbehälters.**

(57) Zum Verhindern des Eindringens von Fremdgas durch die Beschickungsöffnung von inertisierten Reaktionsbehältern dienen mit Inertgas beaufschlagte Schleusen. Eine hochwirksame Schleuse dieser Art besteht aus einem Mantelrrohr (2) und einem Innenrohr (3), welche einen Spalt (4) bilden und auf der Beschickungsöffung angeordnet sind. In den Spalt münden mit Inertgas beaufschlagte Düsen (5) . Vor dem Austrittsquerschnitt des Spaltes befindet sich ein Umlenkblech (7), welches die Inertagsströmung zur Rohrachse hin richtet.

EP 0 396 013 A2

## Vorrichtung zum Verhindern des Eindringens von Fremdgasen durch die Beschickungsöffnung eines inertisierten Reaktionsbehälters

Die Erfindung betrifft eine Vorrichtung zum Verhindern des Eindringens von Fremdgasen durch die Beschickungsöffnung eines inertisierten Reaktionsbehälters während des Beschickungsvorganges nach dem Oberbegriff des Anspruches 1.

Es gibt viele Substanzen, beispielsweise Stäube und Lösungsmittel, bei denen schon eine geringe Menge von oxidierenden Stoffen genügt, um Explosionen, Verpuffungen und Brände auszulösen. Werden derartige Substanzen in Reaktionsbehältern, hierunter sind im Sinne der Erfindung auch Misch-, Tank- und Lagerbehälter zu verstehen, gehandhabt, können derartige unkontrollierbare Reaktionen verhindert werden, indem die Raktionsbehälter inertisiert werden. Als Inertgase dienen hierzu Stickstoff und Kohlendioxid.

Wenn in den Reaktionsbehältern Reaktionen durchgeführt werden, müssen die Behälter vielfach von Zeit zu Zeit geöffnet werden, um Reaktionspartner, beispielsweise Lösungsmittel und Harze, durch die Beschickungsöffnung des Reaktionsbehälters in den Behälter einzuführen. Da diese Beschickungszeiten ohne weiteres fünf bis zehn Minuten und mehr erreichen können, besteht die Gefahr, daß Fremdgas in unzuläßlichen Mengen durch Diffusion und Konvektion in den Reaktionsbehälter eindringt.

Aus der DE-PS 26 13 310 ist eine Vorrichtung bekannt, mit welcher sich das unerwünschte Eindringen von Sauerstoff weitgehend unterdrücken läßt. Diese Vorrichtung besteht im wesentlichen aus einem Trichter, einem Übergangsstück und einem diffusorartig sich aufweitenden Fallrohr, welche auf die Beschickungsöffnung aufgesetzt sind. Das Übergangsstück wird mit Inertgas beaufschlagt, welches durch Düsen so eingebracht wird, daß sich eine Inertgasströmung sowohl in den Reaktionsbehälter hinein als auch in entgegengesetzter Richtung ausbildet. Mit dieser Vorrichtung lassen sich maximale Sauerstoffrestkonzentrationen von ca. 3 Vol.% sicherstellen. Für viele Fälle ist dies ausreichend, andererseits gibt es Substanzen, bei denen mit 3 Vol.% die untere Explosionsgrenze bereits unterschritten ist. So liegen beispielsweise für die Lösungsmittel Benzin, Toluol, Butanon, Cyclohexan und Cyclohexanon die unteren Explosionsgrenzen zwischen 1 und 2 Vol.%.

Der Erfindung liegt daher die Aufgabe zugrunde, eine Vorrichtung zum Verhindern des Eindringens von Fremdgasen durch die Beschickungsöffnung eines inertisierten Reaktionsbehälters während des Beschickungsvorganges zu schaffen, mit welcher Sauerstoff Restkonzentrationen im Reaktionsbehälter von maximal 1 Vol.% auch bei langen Beschickungszeiten gewährleistet werden können.

Ausgehend von den im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen weitergegeben.

Durch die erfindungsgemäße Ausbildung einer Inertgasströmung in einem die Beschickungsöffnung umgebenden Spalt und deren radiale Umlenkung zur Achse der Beschickungsöffnung hin, wird überraschenderweise eine hochwirksame Sperre gegen das Eindringen von Fremdgasen geschaffen. Es genügt hierbei völlig, wenn das diese Umlenkung bewirkende Umlenkblech als einfaches Kreisringsegment vor der Austrittsöffnung des Spaltes angebracht wird. Dies gilt sinngemäß auch dann, wenn die Beschickungsöffnung einen quadratischen oder rechteckigen Querschnitt aufweist. Es ist jedoch auch ohne weiteres möglich, das Umlenkblech so auszubilden, daß das aus dem Spalt austretende Inertgas schräg auf die Achse der Beschickungsöffnung auftrifft und somit eine Komponente in den Reaktionsbehälter hinein oder entgegengesetzt aufweist. Es ist auch möglich, das Umlenkblech mit Aufbauten zu versehen, welche dem Inertgas entsprechende Strömungsprofile aufzwingen.

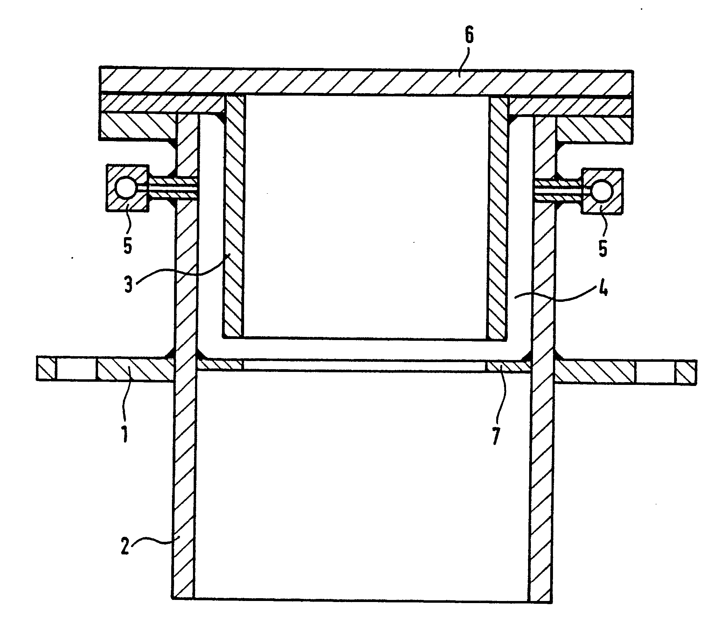

Die Zeichnung veranschaulicht ein Ausführungsbeispiel der Erfindung im Längsschnitt.

Die dargestellte Vorrichtung weist eine Halterung 1 auf, mit deren Hilfe sie an der Beschickungsöffnung des Reaktionsbehälters befestigt wird. Die Halterung 1 ist an ein Mantelrohr 2 angeschweißt, in welches ein Innenrohr 3 so eingesetzt werden kann, daß sich zwischen Innenrohr 3 und Mantelrohr 2 ein Spalt 4 ausbildet. In den Spalt 4 münden mehrere mit Inertgas beaufschlagbare Düsen 5, welche in das Mantelrohr 2 eingeschweißt sind. Wenn keine Reaktionspartner in den Reaktionsbehälter eingeführt werden, ist die Vorrichtung durch einen Dekkel 6 geschlossen. Solange der Deckel 6 aufliegt, erfolgt auch keine Zufuhr von Inertgas durch die Düsen 5. Erfindungsgemäß ist ferner auf der Innenwand des Mantelrohres 2 vor dem Austrittsquerschnitt des Spaltes 4 ein Umlenkblech 7 angeordnet. Dieses Umlenkblech 7 ist, im einfachsten Fall ein Kreisring. Der freie Querschnitt des Innenrohres 3 bleibt weitgehend erhalten. Durch das Umlenkblech 7 wird das durch den Spalt 4 strömende Inertgas in Richtung zur Rohrachse hin umgelenkt. Es bildet sich eine Inertgasströmung in Richtung Behälteröffnung und schließlich eine Inertgassperrschicht aus. Die Sperrschicht für den Sauerstoffeintrag durch das Innenrohr 3 ist so wirksam, daß auch bei langen Öffnungszeiten mit Sicherheit Sauerstoffrestkonzentrationen von 1 Vol.% im Reaktionsbehälter nicht überschritten werden.

Ein besonerer Vorteil der erfindungsgemäßen Vorrichtung ist, daß sich die Düsen 5 nicht während der Zeiten zusetzen können, in denen sie nicht mit Inertgas beaufschlagt werden. Derartige Ablagerungen werden durch das vor den Düsenmündungen befindliche Innenrohr 3 vermieden. Durch die Ausbildung einer gleichmäßigen und beruhigten Inertgasströmung im Spalt 4 läßt sich eine ebenso gleichmäßige Umlenkung des Inertgases in Richtung der Rohrachse erreichen. Diese gleichmäßige und beruhigte Inertgasströmung ist eine wesentliche Ursache für die hohe Wirksamkeit der erfindungsgemäßen Vorrichtung gegen den Sauerstoffeintrag durch die Beschickungsöffnung.

## Ansprüche

1. Vorrichtung zum Verhindern des Eindringens von Fremdgasen durch die Beschickungsöffnung eines inertisierten Reaktionsbehälters während des Beschikkungsvorganges, mit einem mit der Beschickungsöffnung verbindbaren Mantelrohr (2) und mindestens einer in der Wand des Mantelrohres angeordneten Düse (5) zum Einleiten eines Inertgases,
dadurch gekennzeichnet,
daß dem Mantelrohr ein Innenrohr (3) zugeordnet ist, welches am Eintritt des Mantelrohres befestigt ist, kürzer als das Mantelrohr ist, mit dem Mantelrohr einen Spalt (4) bildet und vor den Austrittsöffnungen der Düsen verläuft, wobei ferner auf der Innenwand des Mantelrohres vor dem Querschnitt des Spaltes ein die Inertgasströmung zur Rohrachse hin richtendes Umlenkblech (7) angeordnet ist.

2. Vorrichtung nach Anspruch 1,
gekennzeichnet durch ein die Inertgasströmung senkrecht zur Rohrachse hin richtendes Umlenkblech.

3. Vorrichtung nach Anspruch 2,
dadurch gekennzeichnet,
daß das Umlenkblech ein dem Austrittsquerschnitt des Spaltes gleichmäßig zugeordneter, senkrecht auf der Innenwand des Mantelrohres befestigter Ring ist.